# EUROPEAN PATENT APPLICATION

(11) **EP 4 703 328 A1**
(43) Date of publication of application: **04.03.2026**
(21) Application number: 23946271.6
(22) Date of filing: 27.07.2023
(51) Int. Cl.: C01G 53/00

(54) **POSITIVE ELECTRODE MATERIAL, AND PREPARATION METHOD THEREFOR AND USE THEREOF**

(71) Applicant: GEM Co., Ltd., Shenzhen, Guangdong 518100 (CN); PT QMB New Energy Materials, Jakarta Selatan, Provinsi DKI Jakarta, 12950 (ID); PT Green Eco Nickel, Jakarta Selatan, Provinsi DKI Jakarta, 12950 (ID); PT ESG New Energy Material, Jakarta Selatan, Provinsi DKI Jakarta 12950 (ID)
(72) Inventor: XU, Kaihua, Guangdong 518100 (CN); WANALDI, Rizky, Jakarta, 12950 (ID); HASIBUAN, Andi Syaputra, Jakarta, 12950 (ID); AJI, Tegar Mukti, Jakarta, 12950 (ID)
(74) Representative: Müller-Boré & Partner Patentanwälte PartG mbB
(86) International application number: PCT/CN2023/109656
(87) International publication number: WO 2025/020189

(57) **Abstract**

A cathode material, and a preparation method therefor and the use thereof. The preparation method comprises the following steps: (1) mixing a vanadium source, a complexing agent and a high-molecular polymer with an organic solvent to obtain a mixed solution; (2) respectively performing an atomization treatment on the mixed solution and a metal salt solution, and respectively conveying the mixed solution and the metal salt solution with a gas into a spray pyrolysis furnace to perform mixed pyrolysis, so as to obtain a coated precursor; and (3) mixing the coated precursor with a lithium source or a sodium source, and sintering same to obtain a cathode material. By using a spray pyrolysis method, the tap density and uniformity of the precursor are improved while the precursor is coated, such that a cathode material having good performance can be prepared.

## Description

### TECHNICAL FIELD

Embodiments of the present application relate to the technical field of battery materials, for example, a cathode material, a preparation method therefor and use thereof.

### BACKGROUND

With the consumption of non-renewable resources and the serious environmental pollution brought by traditional energy sources, there is an urgent need to study and develop new energy and energy storage technologies. Lithium-ion batteries are a new generation of secondary batteries, which have the advantages of high specific capacity, good cycling performance, small self-discharge, and good safety performance, and have been used in electronics, new energy vehicles, aerospace and other fields. Due to the abundant reserves and high battery safety of sodium-ion batteries, the application potential of sodium-ion batteries in the field of power batteries for new energy vehicles and large-scale energy storage has brought attention to the development of sodium-ion battery technology in lots of countries. The commonly used methods for the preparation of cathode materials of sodium-ion batteries and lithium-ion batteries are: sol-gel method, spray drying method, co-precipitation method, solid-phase method, and hydrothermal method, etc.

CN112342605A discloses a low-cost, low-cobalt and single-crystal nickel-cobalt-manganese ternary cathode material and a preparation method therefor; a nickel source, cobalt oxide, manganese oxide, a lithium source and a M doping agent are added to a grinder by a certain stoichiometric ratio and wet-grinded until the particle size of insoluble substance in the slurry is less than or equal to 0.5 µm, and the slurry is subjected to spray drying to obtain an energy-conservation, low-cost, low-cobalt, lithium-containing ternary precursor A. A is sintered at high temperature in an oxygen-rich atmosphere, and crushed to obtain a highly-dispersed single-crystal ternary material matrix B; B is dry-coated with X, subjected to solid-phase sintering at low temperature in an air atmosphere, and crushed to obtain the low-cost, low-cobalt and single-crystal cathode material.

CN115215388A discloses a preparation method for a ternary cathode material and a ternary cathode material, which is used to improve the preparation efficiency and yield of the ternary cathode material. The method includes: a manganese salt and/or an aluminum salt are mixed with a nickel salt and a cobalt salt, and the mixture is subjected to a co-precipitation reaction with an alkaline substance and a complexant in a solvent to obtain a co-precipitation slurry with target median particle size; the co-precipitated slurry is washed to obtain a ternary precursor slurry; the lithium source is mixed with the ternary precursor slurry in an inert atmosphere to obtain a first mixture; the first mixture is dried to obtain a second mixture; and the second mixture is sintered at high temperature to obtain the ternary cathode material.

The above solutions uses co-precipitation method and high-temperature solid-phase method to prepare cathode materials. The process of co-precipitation method is complex and cumbersome, and its reaction conditions need to be accurately controlled to keep the physical and chemical indexes of the materials consistent; the high-temperature solid-phase sintering has difficulty in achieving atomic-level mixing, which will cause local enrichment and low discharge specific capacity, and by the high-temperature solid-phase preparation process, the morphology is irregular, particles are uneven, the mixing uniformity of raw materials is limited, and high heat treatment temperature and long heat treatment time are needed.

### SUMMARY

The following is a summary of the subject matter that is described in detail herein. This summary is not intended to be limiting as to the scope of the claims.

An embodiment of the present application provides a cathode material, a preparation method therefor and use thereof. In the present application, the method of spray pyrolysis with simple operation and mild conditions is adopted, by which the materials can be uniformly mixed at the atomic level, and the precursor is improved in the tap density and uniformity while being coated, and a cathode material with excellent performance can be prepared.

In a first aspect, an embodiment of the present application provides a preparation method for a cathode material, and the preparation method includes the following steps:
(1) mixing a vanadium source, a complexant, and a polymer with an organic solvent to obtain a mixed solution;
(2) subjecting the mixed solution and a metal salt solution to an atomization treatment separately and then separately transporting to a spray pyrolysis furnace by gas and performing mixed pyrolysis to obtain a coated precursor; and
(3) mixing and sintering the coated precursor with a lithium source or a sodium source to obtain the cathode material.

In the present application, the coating solution prepared by the vanadium source, the complexant and the polymer is subjected to spray pyrolysis with the mixed metal salt simultaneously; during the atomization process, the polymer forms a cross-linking network through the action of viscosity, and the vanadium source generates a complex under the action of the complexant, the complex disperses in the cross-linking network of the polymer, and then is coated on the surface of the precursor to form a vanadium/carbon co-coated precursor. Due to the existence of micropores, the sintering efficiency can be improved in the subsequent mixing and sintering process with the sodium source or the lithium source, and the wettability of the electrolyte can be improved after battery fabrication. In the present application, a precursor with a micron-level spherical morphology and high tap density can be prepared through a simple process, and then a cathode material with uniform morphology particle size, high reversible specific capacity and good cycling stability under high voltage can be prepared.

Preferably, the vanadium source in step (1) includes ammonium metavanadate.

Preferably, the complexant includes oxalic acid.

Preferably, the polymer includes polyvinylpyrrolidone.

Preferably, the organic solvent includes N,N-dimethylformamide.

Preferably, in step (1), the vanadium source in the mixed solution has a molar concentration of 0.001-0.1 mol/L, for example, 0.001 mol/L, 0.005 mol/L, 0.01 mol/L, 0.08 mol/L, or 0.1 mol/L, and preferably 0.01-0.05 mol/L.

Preferably, the complexant in the mixed solution has a molar concentration of 0.002-0.2 mol/L, for example, 0.002 mol/L, 0.005 mol/L, 0.01 mol/L, 0.1 mol/L, or 0.2 mol/L, and preferably 0.02-0.1 mol/L.

Preferably, the polymer in the mixed solution has a mass concentration of 10-30 g/L, for example, 10 g/L, 15 g/L, 20 g/L, 25 g/L, or 30 g/L.

Preferably, in step (2), a solute of the metal salt solution includes any one or a combination of at least two of a nickel salt, a cobalt salt, a manganese salt, a copper salt, or an iron salt.

Preferably, metal ions in the metal salt solution have a total mass concentration of 80-150 g/L, for example, 80 g/L, 90 g/L, 100 g/L, 120 g/L, or 150 g/L.

Preferably, the atomization treatment includes an ultrasonic atomization treatment.

Preferably, in step (2), the mixed pyrolysis is performed at a temperature of 700-950°C, for example, 700°C, 750°C, 800°C, 850°C, 900°C, or 950°C.

Preferably, the gas includes nitrogen and/or oxygen.

In the present application, the carrier gas will affect the species of precursor generated; using oxygen as the carrier gas, the oxide precursor can be generated, and the use of nitrogen will generate hydroxide precursor, which can be selected according to actual needs.

In the present application, oxygen is adopted to transport the atomized mixed coating solution of metal salt solution, and the vanadium in the coating solution is oxidized under high temperature conditions to generate a vanadium pentoxide/carbon coating layer; vanadium pentoxide has excellent electrochemical properties of unique lithium intercalation advantage, the carbon layer can improve the electrical conductivity, and the vanadium pentoxide/carbon coating layer can improve the conductivity of the cathode material while also improving the electrochemical properties of the material.

Preferably, the gas has a flow rate of 3-8 L/min, for example, 3 L/min, 4 L/min, 5 L/min, 6 L/min, or 8 L/min.

Preferably, the lithium source in step (3) includes any one or a combination of at least two of lithium hydroxide, lithium carbonate, or lithium nitrate.

Preferably, the sodium source includes any one or a combination of at least two of sodium carbonate, sodium bicarbonate, sodium sulfate, sodium bisulfate, sodium oxalate, sodium hydroxide, sodium nitrate, or sodium acetate.

Preferably, a ratio of a molar amount of lithium element in the lithium source or sodium element in the sodium source to a total molar amount of main metal element in the coated precursor is 1-1.15:1, for example, 1:1, 1.05:1, 1.08:1, 1.1:1, or 1.15:1.

In the present application, the main metal element refers to all the metal elements except vanadium.

Preferably, in step (3), the sintering includes a primary sintering and a secondary sintering.

Preferably, the primary sintering is performed at a temperature of 550-600°C, for example, 550°C, 560°C, 570°C, 580°C, or 600°C.

Preferably, the primary sintering is performed for a period of 8-12 h, for example, 8 h, 9 h, 10 h, 11 h, or 12 h.

Preferably, the secondary sintering is performed at a temperature of 800-900°C, for example, 800°C, 820°C, 850°C, 880°C, or 900°C.

Preferably, the secondary sintering is performed for a period of 20-30 h, for example, 20 h, 22 h, 24 h, 28 h, or 30 h.

In a second aspect, an embodiment of the present application provides a cathode material, and the cathode material is prepared by the method as described in the first aspect.

In a third aspect, an embodiment of the present application provides a cathode plate, and the cathode plate includes the cathode material as described in the second aspect.

In a fourth aspect, an embodiment of the present application provides a battery, and the battery includes the cathode plate as described in the third aspect.

Compared with the prior art, embodiments of the present application have the following beneficial effects.
(1) In an embodiment of the present application, a carbon/vanadium composite coating layer with high conductivity is formed on the surface of the cathode precursor by spray pyrolysis method, which improves the stability and conductivity of the material while improving the tap density and uniformity of the material, and the obtained material has high reversible specific capacity and good cycling stability at high voltage.
(2) The method in an embodiment of the present application is suitable for cathode materials of sodium-ion batteries and lithium-ion batteries; for the prepared cathode material of lithium-ion batteries, the initial discharge specific capacity can reach 165 mAh/g, and the capacity retention rate can reach 96.8% after 100 cycles at 1C; for the prepared cathode material of sodium-ion batteries, the initial discharge specific capacity can reach 143.2 mAh/g, and the capacity retention rate can reach 92.6% after 100 cycles at 1C.

Other aspects will be appreciated upon reading and understanding the detailed description.

### DETAILED DESCRIPTION

The technical solutions of the present application are further described below in terms of specific embodiments. It should be clear to those skilled in the art that the embodiments are merely used for a better understanding of the present application and should not be regarded as a specific limitation to the present application.

### Embodiment 1

This embodiment provides a cathode material, and the cathode material was prepared by the following method:
(1) ammonium metavanadate, oxalic acid and polyvinylpyrrolidone (PVP) were mixed with N,N-dimethylformamide (DMF) to give a mixed solution; in the mixed solution, the concentration of oxalic acid was 0.08 mol/L, the concentration of ammonium metavanadate was 0.04 mol/L, and the concentration of polyvinylpyrrolidone was 20 g/L;
(2) nickel sulfate, manganese sulfate, and cobalt sulfate were prepared to a metal salt solution according to Ni:Co:Mn = 8:1:1, and the total mass concentration of the metal ions in the metal salt solution was 100 g/L; the mixed solution and metal salt solution were subjected to atomization treatment separately, transported separately to a spray pyrolysis furnace by nitrogen at a flow rate of 4 L/min, and subjected to mixed pyrolysis at 700°C to obtain a coated precursor; and
(3) the coated precursor was mixed with lithium hydroxide according to Li/M = 1.1:1, and the mixture was subjected to two stages of sintering under an oxygen atmosphere; for the primary sintering, the heating rate was 3°C/min, and the temperature was kept at 580°C for 10 h; for the secondary sintering, the heating rate was 3°C/min, and the temperature was kept at 850°C for 24 h, so as to obtain the cathode material.

### Embodiment 2

This embodiment provides a cathode material, and the cathode material was prepared by the following method:
(1) ammonium metavanadate, oxalic acid and polyvinylpyrrolidone (PVP) were mixed with N,N-dimethylformamide (DMF) to give a mixed solution; in the mixed solution, the concentration of oxalic acid was 0.1 mol/L, the concentration of ammonium metavanadate was 0.05 mol/L, and the concentration of polyvinylpyrrolidone was 22 g/L;
(2) manganese sulfate, copper sulfate, and iron sulfate were prepared to a metal salt solution according to Mn:Cu:Fe = 0.45:0.45:0.4, and the total mass concentration of the metal ions in the metal salt solution was 110 g/L; the mixed solution and metal salt solution were subjected to atomization treatment separately, transported separately to a spray pyrolysis furnace by oxygen at a flow rate of 5 L/min, and subjected to mixed pyrolysis at 700°C to obtain a coated precursor; and
(3) the coated precursor was mixed with sodium carbonate according to Na/M = 1.1:1, and the mixture was subjected to two stages of sintering under an oxygen atmosphere; for the primary sintering, the heating rate was 3°C/min, and the temperature was kept at 550°C for 10 h; for the secondary sintering, the heating rate was 3°C/min, and the temperature was kept at 800°C for 24 h, so as to obtain the cathode material.

### Embodiment 3

This embodiment differs from Embodiment 1 only in that, in the mixed solution, the molar concentration of the vanadium source was 0.01 mol/L, and the molar concentration of the complexant was 0.02 mol/L. Other conditions and parameters were exactly the same as those in Embodiment 1.

### Embodiment 4

This embodiment differs from Embodiment 1 only in that, in the mixed solution, the molar concentration of the vanadium source was 0.05 mol/L, and the molar concentration of the complexant was 0.1 mol/L. Other conditions and parameters were exactly the same as those in Embodiment 1.

### Embodiment 5

This embodiment differs from Embodiment 1 only in that, in the mixed solution, the mass concentration of the polymer was 10 g/L. Other conditions and parameters were exactly the same as those in Embodiment 1.

### Embodiment 6

This embodiment differs from Embodiment 1 only in that, in the mixed solution, the mass concentration of the polymer was 30 g/L. Other conditions and parameters were exactly the same as those in Embodiment 1.

### Comparative Embodiment 1

This comparative embodiment differs from Embodiment 1 only in that the mixed solution was not added during the spray pyrolysis process. Other conditions and parameters were exactly the same as those in Embodiment 1.

Performance tests:
the cathode materials prepared by Embodiments 1-6 and Comparative Embodiment 1 were used to prepare button cells, the button cells were subjected to tests for initial discharge specific capacity and capacity retention rate after 100 cycles at 2.8-4.3 V, 25°C, and 1C rate, and the results are shown in Table 1.

**Table 1**

| | Initial discharge specific capacity (mAh/g) | Capacity retention rate after 100 cycles at 1C rate (%) |
|---|---|---|
| Embodiment 1 | 165 | 96.8 |
| Embodiment 2 | 143.2 | 92.6 |
| Embodiment 3 | 157.3 | 95.7 |
| Embodiment 4 | 158.9 | 96.1 |
| Embodiment 5 | 160.1 | 94.4 |
| Embodiment 6 | 160.6 | 94.3 |
| Comparative Embodiment 1 | 150.5 | 93.5 |

As can be seen in Table 1, from Embodiments 1-2, it can be seen that the method in the present application is suitable for cathode materials of sodium-ion batteries and lithium-ion batteries; for the prepared cathode material of lithium-ion batteries, the initial discharge specific capacity can reach 165 mAh/g, and the capacity retention rate can reach 96.8% after 100 cycles at 1C; for the prepared cathode material of sodium-ion batteries, the initial discharge specific capacity can reach 143.2 mAh/g, and the capacity retention rate can reach 92.6% after 100 cycles at 1C.

From the comparison of Embodiment 1 and Embodiments 3-4, it can be seen that, in the preparation process of the cathode material in the present application, the concentration of the vanadium source in the mixed solution will affect the performance of the cathode material, and by controlling the concentration of the vanadium source in the mixed solution at 0.01-0.05 mol/L (the corresponding complexant is adjusted to twice of the vanadium source), the prepared cathode material has good performance; if the concentration of the vanadium source is overly high, the proportion of vanadium in the coating layer will be large, and the proportion of carbon will be overly small, which affects the conductivity of the material, and if the concentration of the vanadium source is overly low, the vanadium content in the coating layer will reduce, and the electrical properties of the material will reduce.

From the comparison of Embodiment 1 and Embodiments 5-6, it can be seen that, in the preparation process of the cathode material in the present application, the concentration of the polymer in the mixed solution will affect the performance of the cathode material, and by controlling the concentration of the polymer in the mixed solution at 10-30 g/L, the prepared cathode material has good performance; if the concentration of the high-molecular material is overly high, excessive thickness of the formed coating layer will affect the electrical properties of the material, and if the concentration of the high-molecular material is overly low, an intact cross-linking network cannot be formed, and the electrical properties of the material will reduce.

From the comparison of Embodiment 1 and Comparative Embodiment 1, it can be seen that, in the present application, the coating solution prepared by the vanadium source, the complexant and the polymer is subjected to spray pyrolysis with mixed metal salt simultaneously; during the atomization process, the polymer forms a cross-linking network through the action of viscosity, and the vanadium source generates a complex under the action of the complexant, the complex disperses in the cross-linking network of the polymer, and then is coated on the surface of the precursor, the polymer is carbonized after pyrolysis to form micropores, and the vanadium/carbon co-coated precursor is formed, so as to give the cathode material with excellent properties.

The applicant declares that the above is only specific embodiments of the present application, but the protection scope of the present application is not limited thereto, and it should be clear to those skilled in the art that any changes or replacements that can be easily thought of by those skilled in the art within the technology scope disclosed by the present application shall fall within the protection scope and disclosure scope of the present application.

## Claims

1. A preparation method for a cathode material, which comprises the following steps:
(1) mixing a vanadium source, a complexant, and a polymer with an organic solvent to obtain a mixed solution;
(2) subjecting the mixed solution and a metal salt solution to an atomization treatment separately and then separately transporting to a spray pyrolysis furnace by gas and performing mixed pyrolysis to obtain a coated precursor; and
(3) mixing and sintering the coated precursor with a lithium source or a sodium source to obtain the cathode material.

2. The preparation method according to claim 1, wherein the vanadium source in step (1) comprises ammonium metavanadate.

3. The preparation method according to claim 1 or 2, wherein the complexant comprises oxalic acid.

4. The preparation method according to any one of claims 1-3, wherein the polymer comprises polyvinylpyrrolidone.

5. The preparation method according to any one of claims 1-4, wherein the organic solvent comprises N,N-dimethylformamide.

6. The preparation method according to any one of claims 1-5, wherein in step (1), the vanadium source in the mixed solution has a molar concentration of 0.001-0.1 mol/L, and preferably 0.01-0.05 mol/L;
preferably, the complexant in the mixed solution has a molar concentration of 0.002-0.2 mol/L, and preferably 0.02-0.1 mol/L;
preferably, the polymer in the mixed solution has a mass concentration of 10-30 g/L.

7. The preparation method according to any one of claims 1-6, wherein in step (2), a solute of the metal salt solution comprises any one or a combination of at least two of a nickel salt, a cobalt salt, a manganese salt, a copper salt, or an iron salt;
preferably, metal ions in the metal salt solution have a total mass concentration of 80-150 g/L;
preferably, the atomization treatment comprises an ultrasonic atomization treatment.

8. The preparation method according to any one of claims 1-7, wherein in step (2), the mixed
pyrolysis is performed at a temperature of 700-950°C;
preferably, the gas comprises nitrogen and/or oxygen;
preferably, the gas has a flow rate of 3-8 L/min.

9. The preparation method according to any one of claims 1-8, wherein the lithium source in step (3) comprises any one or a combination of at least two of lithium hydroxide, lithium carbonate, or lithium nitrate;
preferably, the sodium source comprises any one or a combination of at least two of sodium carbonate, sodium bicarbonate, sodium sulfate, sodium bisulfate, sodium oxalate, sodium hydroxide, sodium nitrate, or sodium acetate;
preferably, a ratio of a molar amount of lithium element in the lithium source or sodium element in the sodium source to a total molar amount of main metal element in the coated precursor is 1-1.15:1.

10. The preparation method according to any one of claims 1-9, wherein in step (3), the sintering comprises a primary sintering and a secondary sintering;
preferably, the primary sintering is performed at a temperature of 550-600°C;
preferably, the primary sintering is performed for a period of 8-12 h;
preferably, the secondary sintering is performed at a temperature of 800-900°C;
preferably, the secondary sintering is performed for a period of 20-30 h.

11. A cathode material, which is prepared by the method according to any one of claims 1-10.

12. A cathode plate, which comprises the cathode material according to claim 11.

13. A battery, which comprises the cathode plate according to claim 12.
